# EUROPÄISCHE PATENTSCHRIFT

(11) **EP 3 015 157 B1**
(45) Veröffentlichungstag und Bekanntmachung des Hinweises auf die Patenterteilung: **22.03.2017**
(21) Anmeldenummer: 15002951.0
(22) Anmeldetag: 16.10.2015
(51) Int. Cl.: B01D 53/85

(54) **FILTER UND FILTERSYSTEM**
FILTER AND FILTER SYSTEM
FILTRE ET SYSTEME DE FILTRE

(30) Priorität: 30.10.2014 DE 102014115792
(43) Veröffentlichungstag der Anmeldung: 04.05.2016
(73) Patentinhaber: HAGOLA Biofilter GmbH, 49406 Eydelstedt (DE)
(72) Erfinder: Hakemann, Fritz, 49424 Goldenstedt (DE); Rakers, Stefan, 27239 Twistringen (DE)
(74) Vertreter: Heim, Hans-Karl

(56) Entgegenhaltungen:
- EP-B1- 1 563 891
- DE-A1- 4 326 553
- DE-B4- 10 110 519
- DE-U1- 8 801 502
- DE-U1-202005 019 599

## Beschreibung

Die Erfindung betrifft ein Filter zur Reinigung von Abluft, insbesondere von mit Ammoniak belasteter Abluft, aus Tierstallungen, gemäß Oberbegriff des Anspruches 1, und ein Filtersystem mit einem derartigen Filter, gemäß Oberbegriff des Anspruches 9.

Ein Filter der gattungsgemäßen Art ist aus der EP 1 563 891 B1 bekannt.
Der dort beschriebene Filter weist stromaufwärts und stromabwärts von einer Lage Kunststoffmaterials jeweils eine Lage unterschiedlichen Biomaterials auf.
Die grundsätzliche Funktion eines derartigen dreilagigen Filters und die Wirkungsweise verschiedener Mikroorganismen sind in dieser Druckschrift bereits beschrieben. Aufgrund der unterschiedlichen Größen der in den einzelnen Lagen eingesetzten Materialien erscheint die Austauschbarkeit der einzelnen Lagen noch verbesserungsfähig, wobei auch der Reinigungseffekt des Filters noch effizienter werden sollte.

Ein anderer Filter, der nur zwei Lagen Filtermaterial aufweist und ein entsprechendes Filtersystem ist in der DE 101 10 519 B4 beschrieben.
Das hierin beschriebene Filtersystem weist zwar einen stromaufwärts vorgesehenen Druckkammerbereich unterhalb der zwei Lagen Filtermaterial auf. Es bleibt jedoch unklar, wie bei diesem Filtersystem sichergestellt werden kann, dass das Befeuchtungsfluid mit dem erforderlichen Volumen zugeführt werden kann und erforderlichenfalls sicher aus dem Filterbereich abgezogen werden kann.

Auch sind andere Filtersysteme bekannt, die insbesondere für die Reinigung von ammoniak- oder schwefelwasserstoffbelasteter Abluft aus Tierställen eine zweistufige Biofiltration vorsehen, wobei vorgeschaltet noch zwei Abluftwäscher vorgesehen sind, bevor die Abluft der zweistufigen Biofiltration zugeleitet wird.

Die DE202005019599 U1 offenbart einen Biofilter, dessen Aufbau Baustahlmatten, grobes Holz in Form von ungeordneten Schwarten, mineralisches Material und feines Holz in Form von Spänen aufweist.

Unter Berücksichtigung der vorausgehend genannten Beispiele ist es die **Aufgabe** der Erfindung, einen Filter zur Reinigung von insbesondere ammoniakbelasteter Abluft aus Tierställen im Hinblick auf eine höhere Effizienz der Filterung und einen vereinfachten Aufbau mit erleichtertem Austausch von Lagen oder Schichten des Filtermateriales zu konzipieren, sowie ein Filtersystem mit zuverlässiger Befeuchtungsfunktion des Filters zu schaffen.

Diese Aufgabe wird bei einem erfindungsgemäßen Filter durch die Merkmale des Anspruchs 1 und bei einem Filtersystem mit einem derartigen Filter durch die Merkmale des Anspruchs 9 gelöst.

Ein wesentlicher Kerngedanke der Erfindung ist es, den Filter im Hinblick auf bessere Effizienz und leichtere Austauschbarkeit von Lagen, die einzelnen Lagen modulartig beziehungsweise blockartig austauschen zu können. So ist die stromabwärts nach der Tragebene des Filtertraggestells vorgesehene Lage Biomaterial palettenartig oder plattenartig als Holzrost ausgebildet und kann daher auch als Einheit auf die Tragstäbe des Filtertraggestells aufgelegt werden. In diesem Beispiel wird von einer weitgehend vertikal nach oben gedrückten Abluft durch den Filter ausgegangen.
Die Tragstäbe selbst sind hierbei in ihrer Form nach unten beziehungsweise entgegengesetzt zur Strömungsrichtung der Abluft, offen beziehungsweise konkav oder geschlossen ausgebildet.
Die obere Lage Biofiltermaterials, die kleineres Biomaterial, zum Beispiel Holzhackschnitzel, als die untere Lage von Biomaterial aufweist, ist modulartig in einem Kunststoffnetz aufgenommen. Dies ermöglicht es, diese Lage des Biomaterials als Einheit aus dem Filter entfernen zu können. Bei größeren Abmessungen der Lagen des Filters kann die Lage aus mehreren Paketen des entsprechenden Biomaterials bestehen, die einzeln in abluftresistenten Kunststoffnetzen aufgenommen sind und ausgetauscht werden können.
Die als Zwischenlage vorgesehene Lage Kunststoffmaterials wird auf einem Kunststoffgitter gelagert, so dass auch diese Lage im Wesentlichen als Einheit ausgewechselt werden kann.

Die nach unten offene Form, aber auch die geschlossene Form der Tragstäbe des Filtertraggestells bringt im Filterprozess einen zweifachen Effekt. Einerseits wird die in Strömungsrichtung durch die drei Lagen des Filters gedrückte Abluft durch die beabstandeten Tragstäbe einer stärkeren Verwirbelung ausgesetzt, so dass zumindest eine bessere Absorption von Partikeln aus der Abluft in diesem Bereich erfolgen kann. Andererseits wird durch diese Form der Tragstäbe sichergestellt, dass das Befeuchtungsfluid, welches entgegengesetzt zur Strömungsrichtung der Abluft, mindestens der oberen Lage Biomaterials zugeführt wird, im unteren Bereich des Filters über die weitgehend konvexe Form der Tragstäbe als Prozesswasser gut ablaufen kann.

Schwerpunktmäßig weist daher der erfindungsgemäße Filter ein Filtertraggestell auf mit einer unteren, stromaufwärts vorgesehenen Tragebene, die entgegengesetzt zur Strömungsrichtung der Abluft auch offene, beabstandete Tragstäbe aufweisen kann, wobei die stromabwärts nach der Tragebene vorgesehene Lage Biomaterials als palettenartiger Holzrost ausgebildet ist und auf die Tragstäbe auflegbar ist. Der Holzrost bewirkt hierbei eine weitere Abluftverwirbelung.
Zusätzlich wird die Austauschbarkeit der weiter stromabwärts angeordneten Lage Biomaterials in einem Kunststoffnetz aufgenommen, so dass diese Lage, obwohl hierin kleineres und feineres Biomaterial enthalten ist, in Art eines Moduls ausgetauscht werden kann.

Vorausgehend wurde der Filter an einem Beispiel mit der Anordnung der drei Lagen in horizontaler Richtung und der Durchströmung der drei Lagen mit Abluft in vertikaler Richtung zugrunde gelegt.
Es ist aber ebenso möglich, die einzelnen Lagen mit vertikaler Orientierung und angrenzend beziehungsweise benachbart zueinander, in einem Filter anzuordnen, wobei dann die Strömungsrichtung der Abluft etwa horizontal durch den Filter vorgesehen ist.

Im Hinblick auf das Filtersystem zur Reinigung von Abluft aus Tierstallungen, insbesondere von mit Ammoniak belasteter Abluft, und mit mindestens einem vorausgehend genannten Filter, ist ein wesentlicher Gedanke darin zu sehen, dass eine luft- und wasserdicht ausgelegte Umhausung für den Filter vorgesehen ist, die nach oben zur Ableitung der gereinigten Abluft offen ist.

Der Absetzbereich des Filtersystems ist im unteren Bereich der Umhausung als Auffangbecken beziehungsweise Sumpftasse für Partikel und für aus der Befeuchtung mit Befeuchtungsfluid resultierendem Prozesswasser ausgebildet, wobei gegebenenfalls eine Vertiefung als Sumpf vorgesehen ist. Es ist eine Regeleinrichtung vorgesehen, die mindestens die Zufuhr von Befeuchtungsfluid in die Sumpftasse überwacht und die kreislaufmäßige Verwendung von angefallenem Prozesswasser als Befeuchtungsfluid regelt, wobei hierbei das Niveau des Prozesswassers im Absetzbereich mitberücksichtigt wird und Sicherheitseinrichtungen vorgesehen sind, die ein Überschreiten eines maximal zulässigen Niveaus von Prozesswasser im Absetzbereich verhindern. Über die Regeleinrichtung wird auch sichergestellt, dass das sich im Absetzbereich und Sumpf sammelnde Medium an abgesetzten Partikeln aus der Abluft und dem Prozesswasser im Hinblick auf eine effiziente Filtration beziehungsweise Reinigung der Abluft und eine optimale Funktionsweise des Filters, sicher abgeleitet wird.

Das erfindungsgemäße Filtersystem sieht zur Lösung der genannten Aufgabe als wesentliche Merkmale vor, dass der Absetzbereich als Auffangbecken für Partikel und für aus der Befeuchtung mit Befeuchtungsfluid resultierendem Prozesswasser ausgebildet ist, wobei eine Regelungseinrichtung mindestens für die Zufuhr von Prozesswasser, gegebenenfalls auch von Frischwasser, zur Befeuchtungseinrichtung und Regelung des Niveaus des Prozesswassers in dem Absetzbereich vorgesehen ist. Ergänzt wird dies durch eine Überlaufeinrichtung zur Ableitung des Prozesswassers bei Überschreiten eines maximal zulässigen Niveaus im Absetzbereich. Zusätzlich ist eine steuerbare Ableitung des Mediums aus dem Absetzbereich beziehungsweise dem Sumpf vorgesehen.
Auch ist es wichtig, die elektrische Leitfähigkeit (S) beziehungsweise Konnektivität des Prozesswassers zu überwachen und bei Überschreiten eines definierten Grenzwertes ein Signal auszulösen, um ein Absenken des Leitwertes des Prozesswassers verfahrenstechnisch herbeizuführen. Ebenso soll der pH-Wert des Prozesswassers permanent überprüft und gegebenenfalls reguliert werden.

Das Filtersystem zur Reinigung von Abluft aus Tierstallungen, insbesondere wenn diese Abluft mit Ammoniak belastet ist, ist daher mit einem speziellen Filter nach einem der Ansprüche 1 bis 8 ausgestattet und weist eine nach oben offene luft- und wasserdicht ausgelegte Umhausung des Filters auf. Es ist des Weiteren eine Befeuchtungseinrichtung für den Filter vorhanden. Im Betrieb des Filtersystems wird hierbei stromaufwärts oder unterhalb des Filters ein Druckkammerbereich aufgebaut, in den die Abluft unter Druck einleitbar und dem Filter zuleitbar ist. Mit dem Druckkammerbereich ist fluidmäßig ein Absetzbereich für Partikel aus der Abluft und für Befeuchtungsfluid verbunden.

Die wesentliche Funktionsweise des Filters und des Filtersystems besteht darin, die zum Beispiel aus der Tierhaltung abgeleitete Abluft, welche mit Staubpartikeln und Geruchsstoffen, zum Beispiel Ammoniak, belastet ist, beim Durchgang durch den Filter und dessen Filterschichten von Staubpartikel und Geruchsstoffen zu reinigen. Die Geruchsstoffe werden dabei über das feucht gehaltene Filtermaterial absorbiert und von den darauf angesiedelten Mikroorganismen oxidiert beziehungsweise abgebaut. Ammoniak wird im Biofiltermaterial absorbiert und in organischer Masse assimiliert und zu Nitrit und Nitrat oxidiert. Diese Stickstoffverbindungen gelangen während des Durchgangs durch den Filter durch Auswaschen mittels des Befeuchtungsfluids in das im Auffangbecken gesammelte Prozesswasser. Sowohl das Biomaterial als auch das aufgefangene Prozesswasser dienen als Speicher für die entsprechenden Stickstoffverbindungen aus der Abluft.

Aufgrund des im Filter ablaufenden Kompostierungsprozesses wird das in den Lagen vorgesehene Biomaterial zersetzt, so dass ein Auswechseln insbesondere der stromabwärts angeordneten Lage mit kleinerem Biomaterial, insbesondere mit Holzhackschnitzel, in definierten Zeitabständen beachtet werden sollte. Das gesammelte Prozesswasser wird normalerweise gewechselt, wenn eine definierte Leitfähigkeit von z.B. ca. 30 mS erreicht oder überschritten wird. Der Austausch des Biomaterials ist auch davon abhängig, wieweit die Zersetzung des Biomaterials fortgeschritten ist, da dieser Effekt auch einen erhöhten Druckverlust beim Durchströmen des Filters mit Abluft mit sich bringt, wobei der Druck und die Druckverhältnisse in der Druckkammer unterhalb des Filters, durch die Regeleinrichtung überwacht werden. Prozesswasser und zersetztes Biomaterial sollten daher abgeleitet beziehungsweise ausgetauscht werden und können anschließend auch einer landwirtschaftlichen Verwertung zugeführt werden.

Die Auslegung des Filters erfolgt vorzugsweise dahingehend, dass die Tragstäbe des Filtertraggestells konkav, C-förmig oder U-förmig mit ihrer Öffnung entgegengesetzt zur Strömungsrichtung der Abluft angeordnet oder komplett geschlossen sind. Hierdurch wird eine Verwirbelung der Abluft und eine bessere Absorptionsmöglichkeit von Partikeln oder Geruchsstoffen ermöglicht.

Die Lage Kunststoffmaterial weist bevorzugterweise Kunststoffrecyclate auf, was Faserverbundwerkstoffe von recycelten Altteilen, zum Beispiel von Rotorblättern von Windkraftanlagen oder aus der Automobilindustrie sein können.
Dieses Kunststoffmaterial ist zweckmäßigerweise auf einem Kunststoffgitter oder in einem Netz angeordnet und kann damit leicht aus dem Traggestell des Filters ausgetauscht und neu eingesetzt werden.

Die Anordnung der verschiedenen Lagen des Filters in horizontaler Richtung hat den Vorteil, dass das Befeuchtungsfluid, was zweckmäßigerweise Prozesswasser ist, die mehreren Lagen des Filters nach unten durchströmt und dies somit entgegengesetzt zu der nach oben gerichteten Strömungsrichtung der unter Druck eingebrachten Abluft erfolgt.

Dies erleichtert den Auswaschprozess und Absorptionsprozess von Partikeln und Geruchsstoffen im Befeuchtungsfluid.

Die Befeuchtungseinrichtung selbst wird deshalb bevorzugt stromabwärts, benachbart zur in einem Kunststoffnetz aufgenommenen Lage Biomaterials vorgesehen, das heißt, die oberste Lage Biomaterials wird dementsprechend zuerst und besonders intensiv befeuchtet.

Beim Durchleiten von belasteter Abluft durch den Filter siedeln sich auch Mikroorganismen in und auf der Lage des Kunststoffmaterials an. Daher kann auch beim Austausch der obersten Lage Biomaterials relativ zügig eine Wiederbesiedlung dieses Biomaterials mit Mikroorganismen aus der Lage Kunststoffmaterials heraus erfolgen.

Da das Filtertragegestell relativ aggressiven Medien ausgesetzt ist, wird es bevorzugterweise aus rostfreiem Stahl hergestellt, so dass eine lange Betriebszeit erwartet werden kann.

Im Hinblick auf eine kostengünstige Herstellung werden die Tragstäbe aus Edelstahlblechen gekantet, wobei auch eckige, nach unten offene C-Formen erzeugbar sind. Beim Einsatz von Rundrohren können diese längsgeschnitten werden und daraus kostengünstig Halbrohre für den Einsatz als Tragstäbe erreicht werden.

Als Biomaterialien werden geeigneterweise im Holzrost Buchenholz als härteres Biomaterial und in der stromabwärts angeordneten zweiten Lage Biomaterials Hölzer oder Holzhackschnitzel von Weide, Pappel, oder Heidekraut als weiches Biomaterial eingesetzt.

Die Regeleinrichtung des erfindungsgemäßen Filtersystem ist so ausgelegt, dass damit die Signale der im Filtersystem geschalteten Baugruppen, insbesondere von Pumpen, Ventilen, Niveau-, Temperatur- und Drucksensoren, aber auch Leitwert, pH-Wert, erfasst und ausgewertet werden können und darüber auch die Steuerung dieser Baugruppen erfolgen kann.

Die Erfassung und die Steuerung der Baugruppen können über entsprechende Busleitungen erfolgen. Diese zentrale Regeleinrichtung hat auch den Vorteil, dass eine Dokumentation der wesentlichen Parameter des Filtersystems aber auch eine Eingabe von entsprechenden Soll- und Schwellenwerten für ausgewählte Baugruppen erfolgen kann.

Die Umhausung des Filters ist gas- und wasserdicht ausgebildet und weist mindestens eine Bodenplatte, die bevorzugt eben ist, mit oder ohne eine Vertiefung für einen Sumpf oder Sumpfbereich auf. Auf der Bodenplatte sind Seitenwände vorgesehen, welche ebenfalls gas- und wasserdicht mit der Bodenplatte verbunden sind, wobei die Wände und die Bodenplatte den Druckkammerbereich und im unteren Teil einen Absetzbereich für Partikel und ähnliche Stoffe aus der Abluft beziehungsweise eine Sumpftasse bilden.
Der Filter mit Filtertraggestell ist dementsprechend fluiddicht bis auf die obere Öffnung der oberen Lage Biomaterials, die die Austrittsfläche für die gefilterte Abluft darstellt, aufgenommen. Die Dichtheit der Umhausung gegen Gas und Wasser stellt ebenso wie die Dichtheit gegenüber dem Filtertragegestell und den Lagen des Filters sicher, dass ein Druckaufbau für die Abluft in der Druckkammer erzeugt werden kann und damit eine gute Durchströmung der mehreren Lagen des Filters erfolgen kann.

Die Regeleinrichtung ist auch in der Lage, die elektrische Leitfähigkeit des im Auffangbecken gesammelten Prozesswassers zu erfassen und bei einer ermittelten Leitfähigkeit von z.B. ca. 30 mS ein Abpumpen des Prozesswassers beziehungsweise des Mediums aus dem Sumpf zu signalisieren oder auch direkt anzusteuern. Auch ist die Regeleinrichtung so ausgelegt, um den pH-Wert des Prozesswassers zu regeln.
Insbesondere kann bei Überschreitung eines zuvor eingestellten Schwellenwertes für den pH-Wert des Prozesswassers eine Säuredosierung aktiviert werden und insbesondere Schwefelsäure eindosiert werden.

Die modulartigen verschiedenen Filterlagen des Filters haben identische, quadratische Abmessungen im Bereich von 2 m bis 3 m. Je Quadratmeter Filterfläche und Stunde und können etwa 400 m³ bis 600 m³ Abluft behandelt werden. Bevorzugt wird eine Abmessung von etwa 2,25 m x 2,25 m für die Draufsichtsflächen der einzelnen Filterlagen. Die Draufsichtsflächen können auch andere geometrische Formen wie z.B. kreisförmig, elliptisch, rechteckig, polygonal, aufweisen.

Abhängig von dem zu behandelnden Abluftvolumen können auch mehrere Filter als Module hintereinander oder nebeneinander angeordnet werden, wobei die Zuführung der Abluft in eine einheitliche Druckkammer oder den einzelnen Filtern jeweils separat zugeordnete Druckkammern erfolgt.

Das Filtersystem zur biologischen Abluftreinigung eignet sich hervorragend für die Abluft aus einstreulosen Tier- oder Schweinehaltungen, wobei die Filterung der Gesamtstaub- und Geruchsanteile sowie die Absorption von Ammoniak erreicht werden kann. Die Umhausung des Filters im Filtersystem kann aus Beton hergestellt sein, wobei diese Flächen nach Möglichkeit mit einer rissüberbrückenden wasser- und gasfesten Schicht zu überziehen sind. Die Wände und die Bodenplatte der Umhausung können aber auch aus separaten Elementen, z.B. aus Beton- oder Kunststoffplatten, die ebenfalls gas- und wasserdicht sind, hergestellt sein.

Bei der Anordnung mehrerer Filter als Module nebeneinander ist eine gleichmäßige Anströmung der Filter mit Abluft sicherzustellen, wobei auch die Druckstabilität der zum Ansaugen der Abluft eingesetzten Ventilatoren zu berücksichtigen ist.
Um eine gleichmäßige Beaufschlagung aller Filtermodule zu erreichen, kann in Einzelfällen der Einbau weiterer strömungstechnischer Komponenten in den Druckkammerbereich unterhalb des beziehungsweise der Filter erforderlich sein. Bei bevorzugter horizontaler Anordnung der Filterlagen im Filter wird die zu reinigende Abluft zweckmäßigerweise in dem Druckkammerbereich unterhalb der Filterlagen und oberhalb des Niveaus des im Auffangbecken befindlichen Prozesswassers eingeleitet und weitgehend senkrecht von unten nach oben durch die drei Lagen Filtermaterial gedrückt.

Die Befeuchtung des Filtermaterials ist für die Funktionalität des Biofilters von zentraler Bedeutung. Zweckmäßigerweise stellt eine intermittierende Befeuchtung beziehungsweise Bewässerung der Oberflächen der Filtermaterialien den eingebrachten Mikroorganismen das erforderliche, feuchte Milieu zur Verfügung. Die Feuchtigkeit, insbesondere des Biomaterials, sollte dabei idealerweise bei ca. 65 bis 70% liegen. Als Befeuchtungsfluid wird bevorzugterweise im Auffangbecken vorhandenes Prozesswasser im Kreislauf auf die oberste Lage Biomaterial zurückgeführt. Entstehende Verdunstungsverluste des Befeuchtungsfluids werden durch Frischwasser ausgeglichen.

Die im Filtersystem eingesetzte Befeuchtungseinrichtung besteht geeigneterweise aus Edelstahl, wobei spezielle Düsen für eine homogene Befeuchtung der gesamten Oberfläche des Filters sorgen. Art und Anzahl der Düsen sind dabei den individuellen Gegebenheiten anzupassen.

Unterhalb einer Temperatur von + 5°C wird eine Befeuchtung des Filtermaterials durch die Regeleinrichtung nicht aktiviert. Ein Gefälle in der Befeuchtungseinrichtung ermöglicht das Leerlaufen der Leitungen in Befeuchtungspausen und gewährleistet damit die Frostsicherheit der Befeuchtungseinrichtung im Winter.

Längere Standzeiten des Filtersystems ohne Filterung von Abluft sind im Sinne einer nachhaltigen Funktionssicherheit zu vermeiden, da die eingebrachten Mikroorganismen nur im kontinuierlichen Betrieb aktiv sind und sich vermehren.

Die Erfindung wird nachfolgend anhand schematischer Darstellungen noch näher erläutert.

Es zeigen:
- Fig. 1: ein Beispiel eines erfindungsgemäßen Filtersystems in schematischer Darstellung mit der Funktionsweise der zusammenwirkenden Baugruppen;
- Fig. 2: eine perspektivische, schematische Darstellung des unteren Bereichs eines Filters mit Filtertraggestell und einem darauf anordenbaren Holzrost als untere Lage aus Biomaterial, und
- Fig. 3: einen schematischen Schnitt längs A-A durch den Filter in etwas vergrößerter Darstellung.

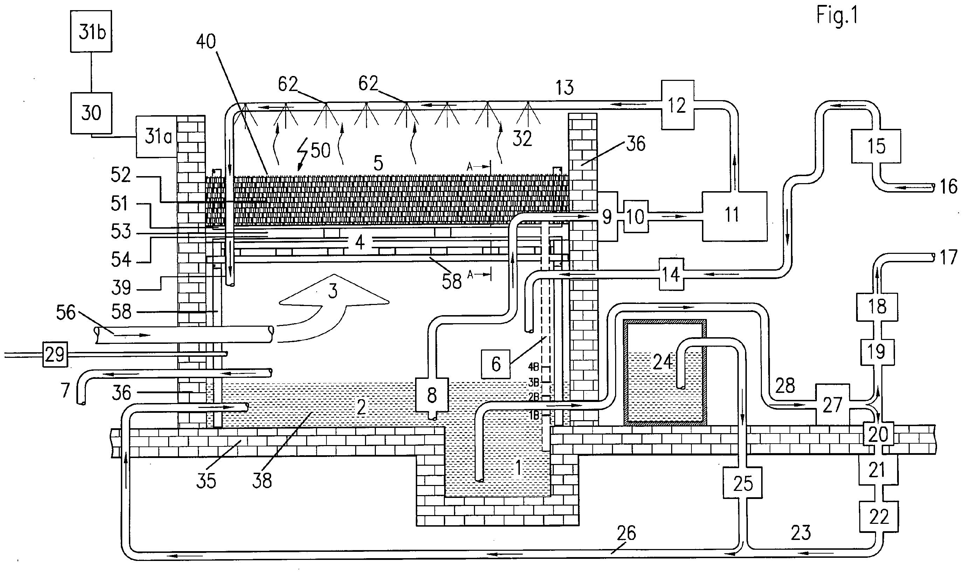

Gemäß Fig. 1 ist ein Filter 50 innerhalb einer gemauerten Umhausung 36 aufgenommen, wobei die Umhausung 36 gas- und wasserdicht ausgebildet ist.

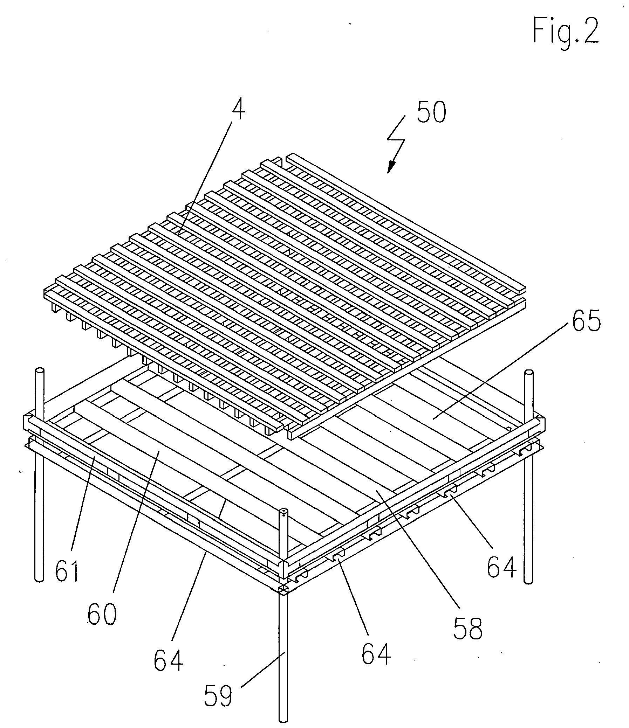

In Fig. 2 ist der untere Teil des Filters 50 perspektivisch und schematisch dargestellt. Der Filter 50 weist hierbei ein Traggestell 58 auf, was in den Eckbereichen vier Vertikalstützen 59 hat. Die Vertikalstützen 59 werden durch umlaufende Seitenbleche 61 miteinander verbunden. Mit horizontaler Ausrichtung und beabstandet zueinander sind Querträger 60 beziehungsweise Tragstäbe 64 im Traggestell 58 fixiert, so dass Querträger 60 und Seitenbleche 61 eine gitterartige Tragwanne oder Tragebene 65 beziehungsweise einen fluiddurchlässigen Rost bilden.

Das gesamte Traggestell 58 wird im Hinblick auf eine hohe Standzeit in relativ aggressiver Umgebung zweckmäßigerweise aus einem Edelstahl hergestellt.

Der Filter 50 selbst weist drei Lagen mit Filtermaterial auf. Die in Fig. 1 unterste Lage Biomaterials wird aus einem platten- beziehungsweise palettenartigen Holzrost 4 gebildet, bei dem zwei bis drei Schichten von Holzlatten mit einer etwa 90°-Versetzung zur benachbarten Schicht fest miteinander verbunden sind, so dass eine starre aber von Abluft und Prozesswasser durchströmbare Palette vorliegt. Dieser starre Holzrost 4 kann als unterste Lage Biomaterials in die Tragwanne beziehungsweise Tragebene 65 des Filtertraggestells 58 relativ passgenau ein- beziehungsweise aufgelegt werden.

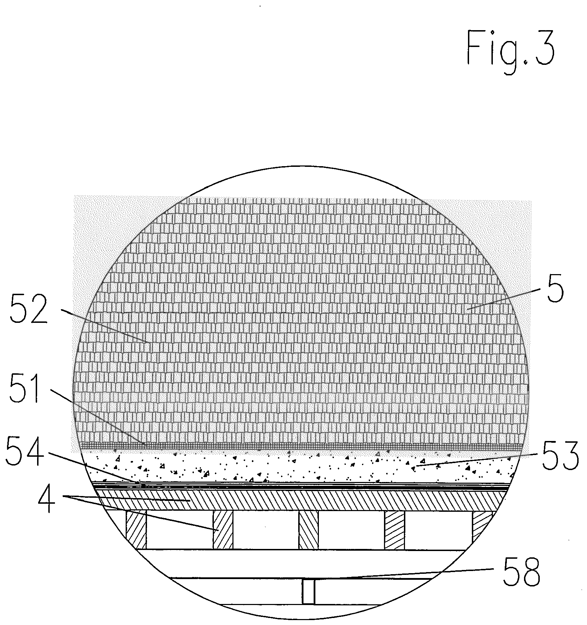

Die weiteren Lagen des Filters 50 (Fig. 1, 3) bestehen aus einer oberen Lage Biomaterials 5, die bevorzugt Holzhackschnitzel aufweist und mit einem diese Holzhackschnitzel umschließenden Kunststoffnetz 52 oder Netz, wobei diese Lage als eine Einheit und als ein Filtermodul ausgebildet ist.

Als Zwischenlage zwischen dem unteren Holzrost 4 und der oberen Lage 5 aus Holzhackschnitzel ist eine Lage 53 aus Kunststoffrecyclat vorgesehen, wobei dieses Kunststoffmaterial auf einem Kunststoffgitter 54, insbesondere stabilisiert, angeordnet ist, so dass die gesamte Lage 53 des Kunststoffrecyclat als Einheit ausgewechselt werden kann.

Die einfache und rasche Austauschbarkeit ist auch bei der oberen Lage 5 aus Holzhackschnitzeln gewährleistet, da mit dem die Holzhackschnitzel umschließenden Kunststoffnetz 52 ein Modul gebildet ist, das als Einheit ausgewechselt werden kann. Dies ist gerade im Hinblick auf die rasche Zersetzung des Biomaterials aus Holzhackschnitzeln ein erheblicher Vorteil.

Ein wesentlicher Aspekt ist auch, auf der zwischen den Lagen 4 und 5 aus Biomaterial eingesetzten Lage 53 aus Kunststoffrecyclat zum Beispiel zur Absorption von Ammoniak, geeignete Mikroorganismen anzusiedeln, die aufgrund des inerten Charakters dieser Kunststoffrecyclate auch dann erhalten bleiben, wenn ein Austausch, insbesondere der oberen Lage 5 mit Biomaterial, erforderlich wird.

Ein Auswechseln der Lage 53 aus Kunststoffrecyclat kann in vergleichbarer einfacher Weise erfolgen, wie auch ein Austausch der untersten Lage 4, die als Holzrost 4 ausgebildet ist.

Das in Fig. 1 schematisch dargestellte Filtersystem weist eine im gezeigten Beispiel gemauerte Bodenplatte 35 auf, die eine Sumpftasse als Auffangbecken 2 mit einem Sumpf 1 nach unten begrenzt. Im rechten Bereich der Bodenplatte 35 ist der Sumpf 1 vorgesehen, um eine Abschlämmung des Prozesswassers aus dem Auffangbecken beziehungsweise der Sumpftasse 2 zu erleichtern. Ausgefilterte Partikel, Stoffe und Material aus dem Prozesswasser 38 können sich im Auffangbecken 2 absetzen.

Mit der Bodenplatte 35 ist die durch Seitenwände gebildete Umhausung 36 gas- und wasserdicht verbunden. Obwohl die Bodenplatte 35 und die Umhausung 36 als gemauerte Einheiten dargestellt sind, können diese baulichen Maßnahmen auch aus Beton oder alternativen, geeigneten Materialien bestehen.

Die zu reinigende Abluft wird über eine Abluftzuleitung 56 in einen Druckkammerbereich 3 zugeführt, der zwischen dem Auffangbecken 2 und dem Filter 50 gebildet ist. Der Filter 50 ist innerhalb der Umhausung 36 mit dem Tragegestellt 58 und den Vertikalstützen 59 (Fig. 2) auf der Bodenplatte 35 abgestützt und wird seitlich abgedichtet in der Umhausung 36 platziert.

Die unter Druck in den Druckkammerbereich 3 über die Abluftzuleitung 56 eingeleitete Abluft wird strömungstechnisch von unten nach oben durch den Filter 50 und die drei Lagen 4, 53, 5 des Filters 50 gedrückt. Zur Befeuchtung des Filters 50 ist oberhalb der obersten Lage 5 eine Leitung 13 zur Zuführung von Prozesswasser vorgesehen, die mit Düsen 62 ausgestattet ist, worüber eingedüste Flüssigkeit 32 auf den Filter und insbesondere auf die obere Lage 5 gesprüht werden kann. Die eingedüste Flüssigkeit 32 fließt schwerkraftmäßig durch die horizontal angeordneten Lagen des Filters 50 und wird im Auffangbecken 2 als Prozesswasser 38 gesammelt.

Die aus der Abluftzuleitung 56 unter Druck in den Druckkammerbereich 3 eingeleitete Abluft strömt zunächst zwischen den Querträgern 60 beziehungsweise Tragstäben 64 (Fig. 2) des Traggestells 58 hindurch und wird durch die nach unten, zum Beispiel C-förmig geöffneten Querträger stark verwirbelt, so dass bereits hier auch aufgrund der Richtungsumkehr der Strömung der Abluft, gröbere Partikel aus der Abluft abgeschieden werden können und in das Prozesswasser 38 im Auffangbecken 2 gelangen.

Nachfolgend wird die Abluft durch den Holzrost 4 als unterste Lage Biomaterials weiter nach oben gedrückt und nochmals verwirbelt, und durchströmt nachfolgend die Lage 53 mit Kunststoffrecyclaten, auf denen sich bei Betrieb des Filters 50 relativ rasch Mikroorganismen ansiedeln. Diese Lage 53 kann etwa eine Schichthöhe von 5 cm bis 10 cm haben.

Die Besiedelung der Lage 53 aus Kunststoffrecyclaten mit Mikroorganismen hat sich als besonders vorteilhaft erwiesen, da bei einem Wechsel der obersten Lage 5 aus Biomaterial eine relativ rasche Besiedelung einer neu eingesetzten Lage 5 mit Mikroorganismen sichergestellt werden kann.

Es hat sich auch bewährt, eine neu eingesetzte Lage 5 aus Biomaterial gegebenenfalls bereits vor dem Einsetzen mit einer Nährstofflösung zu beimpfen, um auf diese Weise ein relativ rasches Anfahren des Filtersystems mit effizienter Filterung der Abluft, zu erreichen.

Die Lage 5 aus Holzhackschnitzel ist in einem stabilen Kunststoffnetz 52 aufgenommen und weist im Normalfall weicheres Biomaterial von Hölzern wie Weide, Pappel oder Heidekraut mit einer Größe an Hackschnitzel im Bereich 30 mm bis 60 mm und einer Schütthöhe von ca. 200 bis 300 mm, insbesondere ca. 250 mm, auf.

Zur Befeuchtung des Filters 50 mit den drei Lagen 5, 53 und 4 wird das im Auffangbecken 2 abgeregnete Prozesswasser 38 mittels einer Pumpe 11 durch ein Vorfilter 8 und einem nachfolgenden Feinfilter 9 angesogen und über einen Druckminderer 12 durch die Leitung 13 den Düsen 62 zugeleitet und als eingedüste Flüssigkeit 32 auf den Filter 50 gesprüht.
Bei dieser Art der Befeuchtung ist ein dem Vorfilter 8 nachgeschaltetes Zwei-Wege-Ventil 10, das zum Beispiel ein Elektrokugelhahn ist, geöffnet. Die Pumpe 11 kann auch durch eine Tauchpumpe im Auffangbecken 2 ersetzt werden, wobei dann das Ventil 10 entfällt.
Sofern das Niveau des Prozesswassers 38 im Auffangbecken 2 weit abgesunken ist und zum Beispiel auf einem Niveau unter der Marke 3B steht, wird das Auffangbecken 2 mit Frischwasser aufgefüllt.
In diesem Fall ist ein Zwei-Wege-Ventil 14 geöffnet. Die aus einem Frischwasserzulauf 16 nachgefüllte Frischwassermenge wird durch eine Wasseruhr 15 erfasst, um in einem elektronischen Tagebuch registriert zu werden.

Die zur Befeuchtung eingedüste Flüssigkeit 32 fließt beziehungsweise rieselt nachfolgend durch die Lagen des Filters 50 und wird im Auffangbecken 2 gesammelt. Prozesswasser, welches über die Leitung 13 nicht auf den Filter 50 abgegeben wurde, kann über eine abschließbare nach unten gerichtete Rücklaufleitung 39 in das Auffangbecken 2 zurückgeführt werden. Bei niedrigen Außentemperaturen, insbesondere unter +5°C, kann die Leitung 13 über die Rücklaufleitung 39 von Restflüssigkeit entleert werden.

Im Auffangbecken 2 wird im Wesentlichen nur Prozesswasser 38 gesammelt, das als Befeuchtungsfluid den Filter 50 nach unten durchströmt hat.
Die Befeuchtung muss mit einer Intensität erfolgen, so dass das Filtermaterial im Filter 50 immer ausreichend feucht ist und immer ein Nettofluss an Flüssigkeit aus dem Filtermaterial in das Auffangbecken 2 erfolgt, wenn das Filtersystem die Berieselung des Filters 50 durchführt.
Im anderen Fall kann es zur schnellen und übermäßigen Anreicherung von Stickstoff insbesondere in der oberen Lage mit Holzhackschnitzel kommen, was zu unangenehmen Sekundärgasbildungen führen kann.

Das Filtersystem ist so ausgelegt, dass permanent eine Überwachung des Leitwertes des im Auffangbecken 2 gesammelten Prozesswassers 38 erfolgt. Wird ein definierter Leitwert von zum Beispiel 30 mS überschritten, erfolgt über die Regeleinrichtung 30 ein Alarmsignal, das dem Betreiber signalisiert, dass mindestens das Flüssigkeitsmedium, das sich im Auffangbecken 2 angesammelt hat, abgeleitet beziehungsweise gewechselt werden muss. Dieses Wechseln beziehungsweise Ableiten des Flüssigkeitsmediums kann auch automatisiert über die Regeleinrichtung 30 erfolgen.
Andererseits ist auch eine Bedienung seitens des Betreibers möglich, wobei das Abschlämmen aus dem Auffangbecken 2 und/oder dem Sumpf 1 zumindest bei Erreichen eines definierten Höchstwertes von z.B. 30 mS durchgeführt werden sollte.

Die manuelle Einschaltung zur Abschlämmung hat den Vorteil, dass der Betreiber sicherstellen kann, dass ein ausreichendes Volumen in einem Auffangbehälter 17 vorhanden ist, um das Medium aus der Abschlämmung aufzunehmen.

Zum Abschlämmen wird mittels einer Pumpe 27 das Medium aus dem Sumpf 1 und dem Auffangbecken 2 über eine Ansaugleitung 28 abgepumpt. Das Medium fließt dabei über ein geöffnetes Zwei-Wege-Ventil 19 durch einen MID 18 (magnetischinduktiver-Durchflussmesser) in den Auffangbehälter 17. Mittels des MID 18 wird das Volumen des abgeschlämmten Mediums gemessen und zweckmäßigerweise zum Beispiel über die Regeleinrichtung 30 dokumentiert.

Um zu verhindern, dass im Prozesswasser 38, dem Auffangbecken 2 und/oder dem Sumpf 1 eine zu starke Absetzung erfolgt oder ein zu hoher Leitwert, als Analogwert von z.B. über 30 mS, ein "Umkippen" des Mediums im Sumpf 1 oder im Auffangbecken 2 beziehungsweise des Prozesswassers signalisiert, wird mittels der Ansaugleitung 28 über die Pumpe 27 Prozesswasser 38 und das Medium aus dem Auffangbekecken 2 und dem Sumpf 1 angesaugt. Hierbei ist das Zwei-Wege-Ventil 19 geschlossen und das Ventil 20 geöffnet. Über eine Messeinrichtung 21 für den Leitwert und eine Messeinrichtung 22 für den pH-Wert wird das Prozesswasser 38 zum Beispiel durch einen druckseitig montierten Schlauch 23 zurück in das Auffangbecken 2 und den Sumpf 1 gepumpt. Dieser Vorgang wird normalerweise mehrmals täglich durchgeführt, wobei der Leitwert und der pH-Wert des zu diesem Zeitpunkt vorliegenden Prozesswassers ermittelt werden kann.

Für den Fall ungeplanter Ereignisse, wie zum Beispiel einen außergewöhnlichen Starkregen oder ein totales Systemversagen, was das Niveau des Prozesswassers 38 im Auffangbecken 2 über den maximal zulässigen Wert ansteigen ließe, ist ein Überlauf 7 vorgesehen, über den Prozesswasser 38 ablaufen kann und das Niveau im Auffangbecken 2 auf einen normalen Wert absinkt. Mittels des Überlaufes 7 wird daher verhindert, dass der Druckkammerbereich 3 sich vollständig mit Prozesswasser füllen würde, wodurch die Entlüftung und Ableitung der Abluft aus der entsprechenden Tierstallung nicht mehr gewährleistet wäre.
Sicherheitsmäßig ist deshalb ein maximaler Wert z.B. bei der Marke 4B vorgesehen, die niveaumäßig unterhalb der Abluftzuleitung 56 liegt, sodass bei diesem Stand ein Alarmsignal abgegeben wird.

Zur Verbesserung der Funktion und Sicherheit des Filtersystems wird sowohl über einen Thermofühler 31a die Außentemperatur als auch über einen weiteren Thermofühler 31 b die Innentemperatur im Gehäuse der Tierstallung erfasst und der Regeleinrichtung 30 zugeführt, um diese Werte funktionsmäßig mit den Befeuchtungserfordernissen des Filters 50 verknüpfen zu können.
Die Regeleinrichtung 30 regelt auch den pH-Wert des Prozesswassers 38.
Hierzu wird bei Überschreitung eines eingestellten Schwellenwertes im Auffangbecken 2, z.B. eines pH-Wertes von 7, eine Säuredosierung aktiviert, wodurch insbesondere Schwefelsäure aus einem Behälter 24 mittels einer Pumpe 25 über die Leitung 26 dem Prozesswasser 38 im Auffangbecken 2 zugeführt werden kann, und der pH-Wert des Prozesswassers gesenkt werden kann.

Auch ist eine Messeinrichtung 29 zur Erfassung des Differenzdruckes zwischen dem Druckkammerbereich 3 und der Umgebung vorhanden, damit ein Überdruck innerhalb der Umhausung 36 und insbesondere im Druckkammerbereich 3 erfasst und geregelt werden kann. Die Aufrechterhaltung eines Überdruckes stellt dabei sicher, dass ein Eindringen von Staub, abgesehen von der eingeblasenen Abluft, verhindert werden kann. Der Wert des Überdrucks lässt Rückschlüsse auf die Kompostierung insbesondere der oberen Filterschicht 5 zu. Überschreitet der Überdruck einen definierten Wert von z.B. 150 Pa sollte das Material gewechselt werden.

Der in Fig. 1 dargestellte Filter 50 ist gemäß Fig. 3 längs des Schnittes A-A in etwas vergrößerter Wiedergabe in einem Kreisausschnitt dargestellt.
In Strömungsrichtung der Abluft von unten nach oben ist zunächst ein horizontaler Teil des Traggestells 58 gezeigt. Nachfolgend nach oben folgt dann die erste Lage des Biomaterials, die als Holzrost 4 mit zwei bis drei Schichten sich kreuzender Holzlatten ausgebildet ist und eine Art Holzpalette bildet.
Des Weiteren folgt nach oben eine Schicht mit Kunststoffrecyclaten 53, die auf einem Kunststoffgitter 54 oberhalb des Holzrostes 4 angeordnet ist.

Die stromabwärts vorgesehene höhere Schicht von Biomaterial 5 ist abhängig von den Dimensionen dieser Schicht in einem oder mehreren Kunststoffnetzen 52 modulartig aufgenommen. Dieses Kunststoffnetz 52 mit dem Biomaterial 5 liegt nach unten gesehen auf einem Traggitter 51 auf, das aus einem Kunststoffmaterial bestehen kann. Bevorzugt kann auch ein Netz in der Art eines Fischernetzes verwendet werden.

Da der gesamte Aufbau des Filters 50 mit den zwei Lagen aus Biomaterial und der einen Lage aus Kunststoffrecyclaten modulartig ausgelegt ist, kann ein relativ einfacher Austausch der einzelnen Lagen Filtermaterials durchgeführt werden, ohne dass ein längerer Stillstand des Filters 50 und des gesamten Filtersystems erforderlich wäre.

Die Funktionen der zentralen Regeleinrichtung 30 mit Erfassung der Signale von einzelnen Baugruppen wie Magnetschwimmer 6, Temperaturfühler 31a, 31b oder Steuerung der Baugruppen des Filtersystems, wie der Pumpen 11, 27, der Ventile, der Zwei-Wege-Ventile 19, 20 und weitere Baugruppen, wird zwar bevorzugt zentral über die Regeleinrichtung 30 durchgeführt. Eine dezentrale Erfassung von Werten und Signalen verschiedener Baugruppen und deren Steuerung ist ebenfalls möglich.

Das derartig ausgelegte Filtersystem weist in dieser Form einen sicherheitstechnisch hohen Standard zum Betrieb eines Filters 50 auf. Der Filter 50 selbst ist mit seinen mehreren Lagen aus Biomaterial und Kunststoffmaterial sehr effizient und wartungsfreundlich ausgelegt, sodass auch die Absorption von Ammoniak aus der Abluft von Tierstallungen, z.B. bis in einen Bereich von ca. 70% und mehr, insbesondere auch aus einstreuloser Schweinehaltung, möglich ist.

## Patentansprüche

1. Filter zur Reinigung von Abluft, insbesondere von mit Ammoniak belasteter Abluft, aus Tierstallungen,
mit einem Filtertraggestell (58),
mit in Strömungsrichtung der Abluft vorgesehenen mindestens zwei auswechselbaren Lagen Biomaterials (4, 5), und mindestens einer zwischen den Lagen Biomaterials angeordneten, auswechselbaren Lage Kunststoffmaterials (53), zur Ansiedlung von Mikroorganismen,
mit einer Befeuchtungseinrichtung mindestens für die stromabwärts angeordnete Lage Biomaterials (5), die weicheres Biomaterial aufweist als die stromaufwärts angeordnete Lage (4) aus härterem Biomaterial,
**dadurch gekennzeichnet,**
**dass** das Filtertraggestell (58) eine untere, stromaufwärts vorgesehene Tragebene (65) mit beabstandeten, eine Abluftverwirbelung bewirkende Tragstäben (64) aufweist,
**dass** die stromabwärts der Tragebene (65) vorgesehene Lage Biomaterials (4) als palettenartiger Holzrost (4) ausgebildet und auf die Tragstäbe (64) aufgelegt ist, und
**dass** die stromabwärts angeordnete weitere Lage Biomaterials (5) modulartig in einem abluftresistenten Netz oder einem Kunststoffnetz (52) aufgenommen ist.

2. Filter nach Anspruch 1,
**dadurch gekennzeichnet,**
**dass** die Tragstäbe (64) nach unten offen, konkav, C-förmig oder U-förmig mit ihrer Öffnung entgegengesetzt zur Strömungsrichtung der Abluft angeordnet sind oder geschlossen ausgebildet sind.

3. Filter nach Anspruch 1 oder 2,
**dadurch gekennzeichnet,**
**dass** die Lage Kunststoffmaterial (53) auf einem Kunststoffgitter (54) oder Netz angeordnet ist.

4. Filter nach einem der Ansprüche 1 bis 3,
**dadurch gekennzeichnet,**
**dass** die Befeuchtungseinrichtung stromabwärts, benachbart zur in einem Netz, insbesondere Kunststoffnetz (52), aufgenommenen weiteren Lage Biomaterials (5) vorgesehen ist.

5. Filter nach einem der Ansprüche 1 bis 4,
**dadurch gekennzeichnet,**
**dass** das Filtertraggestell (58) aus rostfreiem Stahl besteht.

6. Filter nach einem der Ansprüche 1 bis 5,
**dadurch gekennzeichnet,**
**dass** die verschiedenen Lagen (4, 53, 5) des Filters quer zur Strömungsrichtung der Abluft, insbesondere horizontal oder vertikal, angeordnet sind.

7. Filter nach einem der Ansprüche 1 bis 6,
**dadurch gekennzeichnet,**
**dass** mindestens die Lage Kunststoffmaterial (53) Mikroorganismen aufweist.

8. Filter nach einem der Ansprüche 1 bis 7,
**dadurch gekennzeichnet,**
**dass** als härteres Biomaterial Buchenholz und als weicheres Biomaterial Hölzer oder Holzhackschnitzel von Weide, Pappel, oder Heidekraut vorgesehen sind.

9. Filtersystem zur Reinigung von Abluft,
mit einem Filter nach einem der Ansprüche 1 bis 8,
mit einer nach oben offenen, luft- und wasserdicht ausgelegten Umhausung (36) des Filters (50),
mit einer Befeuchtungseinrichtung für den Filter (50),
mit einem Druckkammerbereich (3) stromaufwärts oder unterhalb des Filters (50), in den die Abluft unter Druck einleitbar und dem Filter (50) zuleitbar ist, mit einem mit dem Druckkammerbereich (3) fluidmäßig verbundenen Absetzbereich für Partikel aus der Abluft und für Befeuchtungsfluid,
**dadurch gekennzeichnet,**
**dass** der Absetzbereich als Auffangbecken (2) für Partikel und für aus der Befeuchtung mit Befeuchtungsfluid resultierendem Prozesswasser (38) ausgebildet ist,
**dass** eine Regelungseinrichtung (30) mindestens für die Zufuhr von Befeuchtungsfluid oder Prozesswasser (38) zur Befeuchtungseinrichtung und die Regelung des Niveaus des Prozesswassers (38) in dem Auffangbecken (2) vorgesehen ist,
**dass** eine Überlaufeinrichtung (7) zur Ableitung des Prozesswassers (38) bei Überschreiten eines maximal zulässigen Niveaus in dem Auffangbecken (2) vorgesehen ist, und
**dass** eine steuerbare Ableitung (28) für Prozesswasser (38) und abgesetzte Partikel aus dem Auffangbecken (2) vorhanden ist.

10. Filtersystem nach Anspruch 9,
**dadurch gekennzeichnet,**
**dass** die Regeleinrichtung (30) zur Erfassung von Signalen der im Filtersystem vorgesehenen Baugruppen, insbesondere von Pumpen, Ventilen, Niveau-, Temperatur- und Drucksensoren, zur Messung von Leitwerten und pH-Werten von Flüssigkeiten, und zur Steuerung dieser Baugruppen ausgelegt ist.

11. Filtersystem nach Anspruch 9 oder 10,
**dadurch gekennzeichnet,**
**dass** die Umhausung (36) des Filters gas- und wasserdicht ausgebildet ist und mindestens eine Bodenplatte (35) mit oder ohne einem Sumpf (1) aufweist, und mit der Bodenplatte (35) gas- und wasserdicht verbundene Seitenwände vorgesehen sind, die die Wände des Druckkammerbereichs (3) bilden und den Filter (50) mit Filtertraggestell (58) fluiddicht bis auf die obere Öffnung (40) der oberen Lage Biomaterial (5) als Austrittsfläche für die gefilterte Abluft, aufnehmen.

12. Filtersystem nach einem der Ansprüche 9 bis 11,
**dadurch gekennzeichnet,**
**dass** die Regeleinrichtung (30) zur Erfassung der elektrischen Leitfähigkeit des Prozesswassers (38) ausgelegt ist und bei einer Leitfähigkeit, die einen definierten Wert überschreitet, ein Abpumpen des Prozesswassers (38) oder des Sumpfes (1) anzeigt oder steuert.

13. Filtersystem nach einem der Ansprüche 9 bis 12,
**dadurch gekennzeichnet,**
**dass** eine Einrichtung (24, 25, 26) zur Regelung des pH-Wertes des Prozesswassers (38) vorgesehen ist.

14. Filtersystem nach Anspruch 13,
**dadurch gekennzeichnet,**
**dass** die Einrichtung (24, 25, 26) zur Regelung des pH-Wertes zur Säuredosierung zum Prozesswasser (38) ausgelegt ist, die betätigbar oder automatisch beim Überschreiten eines eingestellten definierten pH-Schwellenwertes des Prozesswassers im Auffangbecken (2), die Säuredosierung initiiert.

15. Filtersystem nach einem der Ansprüche 9 bis 14,
**dadurch gekennzeichnet,**
**dass** Mittel (27, 28, 19, 18, 17, 20) zum Wechseln des Prozesswassers (38), abhängig von dessen Leitwert, vorgesehen sind.

## Claims

1. Filter for purifying waste air, in particular waste air loaded with ammonia from animal stalls, having:
a filter support frame (58),
at least two exchangeable layers of biomaterial (4, 5) provided in the flow direction of the waste air, and, arranged between the layers of biomaterial, at least one exchangeable layer of plastic material (53) for the settling of micro-organisms,
a humidifying device at least for the layer of biomaterial (5) arranged downstream, which has softer biomaterial than the layer (4) of harder biomaterial arranged upstream,
**characterised in that**
the filter support frame (58) has a lower support plane (65), provided upstream,
with spaced-apart support rods (64) bringing about waste air turbulence,
the layer of biomaterial (4) provided downstream of the support plane (65) is formed as a pallet-like wooden grating (4) and is placed on the support rods (64),
and
the further layer of biomaterial (5) arranged downstream is accommodated in a modular form in a waste air-resistant mesh or a plastic mesh (52).

2. Filter according to claim 1,
**characterised in that**
the support rods (64) are arranged to be downwardly open, concave, C-shaped or U-shaped with their opening counter to the flow direction of the waste air or they are formed closed.

3. Filter according to claim 1 or 2,
**characterised in that**
the layer of plastic material (53) is arranged on a plastic grating (54) or mesh.

4. Filter according to one of claims 1 to 3,
**characterised in that**
the humidifying device is provided downstream, adjacent to the further layer of biomaterial (5) received in a mesh, in particular plastic mesh (52).

5. Filter according to one of claims 1 to 4,
**characterised in that**
the filter support frame (58) is made of stainless steel.

6. Filter according to one of claims 1 to 5,
**characterised in that**
the different layers (4, 53, 5) of the filter are arranged transversely relative to the flow direction of the waste air, in particular horizontally or vertically.

7. Filter according to one of claims 1 to 6,
**characterised in that**
at least the layer of plastic material (53) has micro-organisms.

8. Filter according to one of claims 1 to 7,
**characterised in that**
beech wood is provided as harder biomaterial and woods or wood chips of willow, poplar or heather as softer biomaterial.

9. Filter system for purifying waste air,
having a filter according to one of claims 1 to 8,
having:
an upwardly open, airtight and watertight housing (36) around the filter (50),
a humidifying device for the filter (50),
a pressure chamber area (3) upstream of, or below, the filter (50), into which the waste air can be introduced under pressure and fed to the filter (50),
a deposit area, fluidically connected to the pressure chamber area (3), for particles from the waste air and for humidifying fluid,
**characterised in that**
the deposit area is formed as a retention basin (2) for particles and for process water (38) resulting from the humidification with humidifying fluid,
a regulating device (30) is provided at least for the supply of humidifying fluid or
process water (38) to the humidifying device and the regulation of the level of the process water (38) in the retention basin (2),
an overflow device (7) is provided to divert the process water (38) if a maximum admissible level in the retention basin (2) is exceeded, and
a controllable discharge pipe (28) for process water (38) and deposited particles from the retention basin (2) is present.

10. Filter system according to claim 9,
**characterised in that**
the regulating device (30) is designed to detect signals of the components provided in the filter system, in particular pumps, valves, level, temperature and pressure sensors, to measure conductivities and pH values of liquids, and to control these components.

11. Filter system according to claim 9 or 10,
**characterised in that**
the housing (36) around the filter is formed gastight and watertight and has at least one bottom plate (35) with or without a sump (1), and side walls connected to the bottom plate (35) in a gastight and watertight manner are provided, which form the walls of the pressure chamber area (3) and receive the filter (50) with filter support frame (58) in a fluidically sealed way apart from the top opening (40) of the upper layer of biomaterial (5) as a discharge surface for the filtered waste air.

12. Filter system according to one of claims 9 to 11,
**characterised in that**
the regulating device (30) is designed to detect the electrical conductivity of the process water (38) and it indicates or controls pumping away of the process water (38) or the sump (1) if a conductivity exceeds a defined value.

13. Filter system according to one of claims 9 to 12,
**characterised in that**
a device (24, 25, 26) for regulating the pH value of the process water (38) is provided.

14. Filter system according to claim 13,
**characterised in that**
the device (24, 25, 26) is designed to regulate the pH value by dosing of acid to the process water (38), initiating the dosing of acid, upon activation or automatically, if a set, defined pH limit of the process water in the retention basin (2) is exceeded.

15. Filter system according to one of claims 9 to 14,
**characterised in that**
means (27, 28, 19, 18, 17, 20) for changing the process water (38), in dependence upon the conductivity thereof, are provided.

## Revendications

1. Filtre pour le nettoyage d'air évacué, en particulier d'air évacué chargé d'ammoniac, provenant de bâtiments pour les animaux,
avec une monture de support à filtre (58),
avec au moins deux couches interchangeables de biomatériau (4, 5) prévues dans la direction du flux d'air évacué et au moins une couche de matériau en plastique (53) interchangeable placée entre les couches de biomatériau, pour l'implantation de micro-organismes,
avec un dispositif d'humidification au moins pour la couche de biomatériau (5) placée en aval, qui présente un biomatériau plus souple que la couche (4) placée en amont en biomatériau plus dur,
**caractérisé en ce que**
la monture de support à filtre (58) présente un niveau porteur (65) inférieur, prévu en amont, avec des barres porteuses (64) espacées créant un tourbillonnement de l'air évacué,
la couche de biomatériau (4) prévue en aval du niveau porteur (65) est formée en tant que rayonnage en bois (4) de type palette et appliquée sur les barres porteuses (64), et
l'autre couche de biomatériau (5) placée en aval est incorporée de manière modulaire dans un maillage résistant à l'air évacué ou dans un maillage en plastique (52).

2. Filtre selon la revendication 1
**caractérisé** enceque
les barres porteuses (64) sont placées ouvertes vers le bas, concaves, en forme de C ou en forme de U avec leur ouverture dans le sens contraire de la direction du flux de l'air évacué ou formées de manière fermée.

3. Filtre selon la revendication 1 ou 2
**caractérisé** enceque
la couche de matériau en plastique (53) est placée sur une grille en plastique (54) ou sur un maillage.

4. Filtre selon une des revendications 1 à 3
**caractérisé en ce que**
le dispositif d'humidification est prévu en aval, adjacent à une autre couche de biomatériau (5) incorporée dans un maillage, en particulier un maillage en plastique (52).

5. Filtre selon une des revendications 1 à 4
**caractérisé** enceque
la monture de support à filtre (58) est composée d'acier inoxydable.

6. Filtre selon une des revendications 1 à 5
**caractérisé** enceque
les différentes couches (4, 53, 5) du filtre sont placées transversalement à la direction du flux de l'air évacué, en particulier horizontalement ou verticalement.

7. Filtre selon une des revendications 1 à 6
**caractérisé** enceque
au moins la couche de matériau en plastique (53) présente des micro-organismes.

8. Filtre selon une des revendications 1 à 7
**caractérisé en ce que**
sont prévus, en tant que biomatériau plus dur, du bois de hêtre et, en tant que biomatériau plus souple, du bois ou des copeaux de bois de saule, de peuplier ou de bruyère.

9. Système de filtrage pour le nettoyage d'air évacué avec un filtre selon une des revendications 1 à 8,
avec un habitacle (36), conçu pour être ouvert vers le haut, étanche à l'air et à l'eau, du filtre (50),
avec un dispositif d'humidification pour le filtre (50),
avec une zone de chambre de pression (3) en amont ou en dessous du filtre (50), dans laquelle l'air évacué peut être introduit sous pression et peut être conduit vers le filtre (50),
avec une zone de dépôt pour les particules provenant de l'air évacué et pour le fluide d'humidification, qui est connectée de manière fluidique avec la zone de chambre de pression (3),
**caractérisé en ce que**
la zone de dépôt est formée en tant que bassin collecteur (2) pour des particules et pour l'eau de traitement (38) résultant de l'humidification avec du fluide d'humidification,
un dispositif de réglage (30) est prévu au moins pour l'introduction de fluide d'humidification ou d'eau de traitement (38) dans le dispositif d'humidification et pour le réglage du niveau de l'eau de traitement (38) dans le bassin collecteur (2),
un dispositif de débordement (7) est prévu pour l'évacuation de l'eau de traitement (38) en cas de dépassement d'un niveau maximal autorisé dans le bassin collecteur (2), et
une évacuation manoeuvrable (28) est disponible pour l'eau de traitement (38) et pour les particules déposées provenant du bassin collecteur (2).

10. Système de filtrage selon la revendication 9
**caractérisé en ce que**
le dispositif de réglage (30) est conçu pour la détection de signaux des assemblages prévus dans le système de filtrage, en particulier de pompes, de soupapes, de sondes de pression, de température et de niveau, pour mesurer des conductances et des valeurs de pH de liquides et pour contrôler ces assemblages.

11. Système de filtrage selon la revendication 9 ou 10,
**caractérisé** enceque
l'habitacle (36) du filtre est conçu pour être étanche au gaz et à l'eau et présente au moins une plaque de fond (35) avec ou sans bain de liquide (1), et des parois latérales reliées de manière étanche au gaz et à l'eau à la plaque de fond (35), lesquelles constituent les parois de la zone de chambre de pression (3) et incorpore le filtre (50) avec monture de support de filtre (58) de manière étanche aux fluides jusqu'à l'ouverture (40) supérieure de la couche supérieure de biomatériau (5) en tant que zone de sortie pour l'air évacué filtré.

12. Système de filtrage selon une des revendications 9 à 11
**caractérisé** enceque
le dispositif de réglage (30) est conçu pour la détection de la conductivité électrique de l'eau de traitement (38) et, en cas de conductivité qui dépasse une valeur définie, affiche ou commande un pompage de l'eau de traitement (38) ou du bain de liquide (1).

13. Système de filtrage selon une des revendications 9 à 12
caractérisé enceque
un dispositif (24, 25, 26) pour le réglage de la valeur de pH de l'eau de traitement (38) est prévu.

14. Système de filtrage selon la revendication 13
**caractérisé** enceque
le dispositif (24, 25, 26) pour régler la valeur de pH est conçu pour le dosage d'acide ajouté à l'eau de traitement (38), laquelle initie le dosage acide de manière actionnable ou automatique en cas de dépassement d'une valeur-seuil de pH définie et réglée de l'eau traitée dans le bassin de collecte (2).

15. Système de filtrage selon une des revendications 9 à 14
**caractérisé** enceque
des moyens (27, 28, 19, 18, 17, 20) sont prévus pour le changement de l'eau de traitement (38), indépendamment de la conductance de celle-ci.
